# EUROPÄISCHE PATENTSCHRIFT

(11) **EP 1 609 579 B1**
(45) Veröffentlichungstag und Bekanntmachung des Hinweises auf die Patenterteilung: **12.03.2008**
(21) Anmeldenummer: 04015074.0
(22) Anmeldetag: 26.06.2004
(51) Int. Cl.: B29C 45/67

(54) **Schliesseinheit für eine Spritzgiessvorrichtung**
Clamping unit of an injection moulding apparatus
Unité de fermeture d'une presse à injecter

(43) Veröffentlichungstag der Anmeldung: 28.12.2005
(73) Patentinhaber: MAPLAN Maschinen und technische Anlagen, Planungs- und Fertigungsgesellschaft m.b.H, 2630 Ternitz (AT)
(72) Erfinder: Laurent, Michel, 73290 La Motte Servolex (FR)
(74) Vertreter: Gosdin, Michael

(56) Entgegenhaltungen:
- DE-C- 10 100 001
- US-A- 2 718 663

## Beschreibung

Die Erfindung betrifft eine Schließeinheit für eine Spritzgießvorrichtung zur Verarbeitung von thermoplastischem, duroplastischem oder elastomerem Material, bei der zwischen zwei mittels Holmen auf Abstand gehaltenen festen Platten eine relativ zu diesen verschiebbare Werkzeugplatte angeordnet ist, wobei an einer der festen Platten und an der verschiebbaren Werkzeugplatte je ein Teil eines Spritzgießwerkzeugs angeordnet ist, wobei zwischen der einen festen Platte und der verschiebbaren Werkzeugplatte ein die Schließkraft erzeugendes Krafterzeugungselement angeordnet werden kann und wobei die Holme in vertikaler Ausrichtung angeordnet sind, wobei das Krafterzeugungselement an der verschiebbaren Werkzeugplatte befestigt ist, wobei an der einen festen Platte ein Verriegelungselement angeordnet ist, das gesteuert entweder einen Anschlag für das Krafterzeugungselement an der einen festen Platte bildet oder eine Öffnung zum Eintritt bzw. Durchtritt zumindest eines Teils des Krafterzeugungselements in bzw. durch die eine feste Platte freigibt, und wobei das Krafterzeugungselement als hydraulisches Kolben-Zylinder-System ausgebildet ist.

Eine Schließeinheit für eine Spritzgießmaschine der gattungsgemäßen Art ist beispielsweise aus der US 2,718,663 bekannt. Dort wird ein Maschinenkonzept in vertikaler Bauart offenbart, bei dem zwischen einer festen Platte und einer beweglichen Werkzeugaufspannplatte eine Krafterzeugungseinheit in Form eines hydraulischen Kolben-Zylinder-Systems angeordnet ist. Der Kolben der Krafterzeugungseinheit ist mit einer Anzahl Druckstangen verbunden, die wahlweise entweder in Bohrung in der festen Platte eintreten können oder hieran durch eine vorgeschobene Platte gehindert werden können.

Eine ähnliche Lösung zeigt die US 4,875,849. Bei der dort beschriebenen Maschine zur Fertigung von Gummiprodukten handelt es sich auch um eine Vertikalmaschine, d. h. die Schließbewegung des Werkzeugs verläuft vertikal. Hierdurch wird eine insgesamt raumsparende Lösung erreicht, da die Grundfläche der Maschine relativ gering ist, verglichen mit Horizontalmaschinen, bei denen beim Öffnen und Schließen des Spritzgießwerkzeugs eine horizontale Verschiebebewegung erfolgt.

Bei der vorbekannten Spritzgießmaschine gemäß der US 4,875,849 ist im oberen Bereich der Maschine das zweiteilig ausgebildete Spritzgießwerkzeug angeordnet, wobei ein Teil des Werkzeugs beim Öffnen und Schließen die genannte Vertikalbewegung ausübt. Um die Schließkraft zum Zusammenklemmen des Werkzeugs beim Einspritzen von Gummimaterial aufzubringen, ist ein hydraulisches Kolben-Zylinder-System im unteren Teil der Maschine angeordnet. Auf Grund der benötigten Schließkraft ergibt sich eine nicht unerhebliche Größe des Krafterzeugungselements, so dass die Maschine zur ergonomisch sinnvollen Bedienung entweder in einer Grube im Boden der Maschinenhalle angeordnet werden oder der Bedienungsmann auf einem Podest arbeiten muss.

Um diese Nachteile zu reduzieren, sind Lösungen bekannt geworden, bei denen das Krafterzeugungselement zum Aufbringen der Schließkraft - zumeist ausgebildet als hydraulisches Kolben-Zylinder-System - nicht fest in der Spritzgießmaschine angeordnet ist, sondern eine Verschiebebewegung quer zur Schließrichtung des Werkzeugs ausführen kann.

Die DE-OS 18 15 712 offenbart eine Spritzgießmaschine, bei der die gesamte Krafterzeugungseinheit mittels eines Bewegungselements aus dem durch die Maschinenholme definierten Inneren der Spritzgießmaschine senkrecht zur Schließbewegungsrichtung herausgefahren werden kann. Dadurch ist es möglich, beim Öffnen und Schließen des Werkzeugs den benötigten Öffnungshub des Werkzeugs zu fahren, ohne dass dem die Krafterzeugungseinheit im Wege steht.

Eine ähnliche Lösung offenbart die DE-OS 19 12 240**,** die DE-PS 1 006 590 und die DE 101 00 001 C1**.**

Bei der Lösung der zuletzt genannten Schrift ist vorgesehen, dass zum Öffnen des Spritzgießwerkzeugs die Krafterzeugungseinheit aus dem inneren Bereich der Maschine herausgeschwenkt wird, so dass die verschiebbare Werkzeugplatte ungehindert nach unten fahren kann.

All diese Lösungen, die mit ausfahrbarer Krafterzeugungseinheit arbeiten, weisen Nachteile auf, die insbesondere bei der Produktion von Formteilen aus Elastomeren auf Vertikalmaschinen zu Buche schlagen:

Das Aus- und Einfahren der Krafterzeugungseinheit quer zur Schließrichtung des Werkzeugs bedeutet ein Verschieben großer Massen, was aufgrund der benötigten Produktionsgeschwindigkeit der Maschine Massenkräfte zur Folge hat, die zu erheblichen dynamischen Problemen führen. Nachdem die Verfahrenzeit der Krafterzeugungseinheit direkten Einfluss auf die Zykluszeit der Maschine und damit auf deren Produktivität hat, ist ein hoher regelungstechnischer Aufwand notwendig, um die Massenkräfte zu beherrschen, was zu entsprechend teuren Konstruktionen führt.

Ferner haben die genannten Massenkräfte und die Querbeschleunigungen, die auf die Krafterzeugungseinheit wirken, Vibrationen zur Folge, die insbesondere für die Dichtsysteme der hydraulischen Komponenten schädlich sind. Daher ist die Lebensdauer derartiger Systeme kürzer, als dies ohne Vibrationen der Fall wäre.

Nachteilig ist ferner, dass die Unterstützung der verschiebbaren Werkzeugplatte bei Lösungen dieser Art auf den Durchmesser des Kolbens des Krafterzeugungselements beschränkt ist, was mit Blick auf das Verformungsverhalten des Werkzeugs und der Gesamtmaschine negativ ist.

Bekannt geworden sind auch Lösungen, die mit einem ausfahrbaren Druckstück in einer der festen Platten arbeiten, wobei das Druckstück mit einem Druckkissen zusammenwirkt, das die Schließkraft aufbringt. Abgesehen davon, dass es sich dabei um relativ teure Konstruktionen handelt, ist die damit erzielbare Bedienhöhe immer noch nicht ausreichend niedrig. Außerdem wird die verschiebbare Werkzeugplatte in diesem Falle nur lokal gegen Durchbiegung unterstützt, so dass das Werkzeug nicht in an sich angestrebter großflächiger Unterstützung zusammengehalten wird.

Im Lichte des vorbekannten Standes der Technik liegt der Erfindung daher die **Aufgabe** zugrunde, eine Schließeinheit für eine Spritzgießmaschine der eingangs genannten Art zu schaffen, die die erwähnten Nachteile nicht mehr aufweist. Es wird also eine Konstruktion angestrebt, die einfach aufgebaut und damit preiswert herstellbar ist und die sicherstellt, dass die Bedienhöhe der Vertikalmaschine ausreichend niedrig ist, so dass weder Gruben im Hallenboden noch Podeste für den Maschinenbediener erforderlich sind. Weiterhin soll die verschiebbare Werkzeugplatte optimal unterstützt werden, so dass deren Durchbiegung gering gehalten werden kann. Schließlich soll auf eine Querbewegung des Krafterzeugungselements verzichtet werden können, so dass insbesondere dessen Dichtungssysteme geschont werden und die Lebensdauer der Einheit hoch ist.

Die **Lösung** dieser Aufgabe durch die Erfindung ist dadurch gekennzeichnet, dass der Zylinder des Krafterzeugungselements mit der verschiebbaren Werkzeugplatte verbunden ist und dass sich der Kolben des Krafterzeugungselements in Achsrichtung des Krafterzeugungselements vertikal nach unten erstreckt, wobei das Verriegelungselement plattenförmig ausgebildet ist und in einer Führung in horizontale Richtung verschiebbar gelagert ist und wobei die Öffnung zum Eintritt bzw. Durchtritt des Kolbens des Krafterzeugungselements zentrisch in der festen Platte ausgebildet ist.

Bevorzugt ist das in vertikale Richtung unten angeordnete Ende des Kolbens zur Anlage am Anschlag des Verriegelungselements ausgebildet. Mit dieser Ausgestaltung wird eine günstige Krafteinleitung in die verschiebbare Werkzeugplatte sichergestellt.

Das Verriegelungselement ist mit Vorteil mit Antriebsmitteln zwischen einer Geschlossenposition und einer Geöffnetposition verfahrbar. In der Geschlossenposition bildet das Verriegelungselement den Anschlag zur Anlage des Krafterzeugungselements, so dass die Schließkraft zwischen der einen festen Platte und der verschiebbaren Werkzeugplatte aufbringbar ist. In der Geöffnetposition wird hingegen die Öffnung für den Eintritt bzw. den Durchtritt zumindest eines Teils des Krafterzeugungselements in bzw. durch die eine feste Platte freigegeben, so dass das Krafterzeugungselement in die feste Platte eintauchen oder durch sie hindurchtreten kann. Dabei können die Antriebsmittel als elektrische Antriebsmittel ausgebildet sein. Alternativ sind die Antriebsmittel als hydraulische Antriebsmittel ausgebildet. Vorzugsweise sind die Antriebsmittel zum geschwindigkeitsgeregelten und/oder lagegeregelten Anfahren der Geschlossenposition bzw. der Geöffnetposition ausgebildet.

Mit dem Erfindungsvorschlag wird die zugrunde liegende Aufgabe vollumfänglich gelöst, d. h. die entsprechend ausgebildete Schließeinheit für eine Spritzgießmaschine weist diverse Vorteile auf:

Die Konstruktion der Maschine ist wesentlich einfacher als vergleichbare Systeme, so dass die Maschine preiswert herstellbar ist.

Die Bedienhöhe für den Maschinenbediener ist ausreichend gering, so dass auf Gruben im Hallenboden oder auf Podeste für den Bediener verzichtet werden kann.

Die Unterstützung der verschiebbaren Werkzeugplatte ist optimal, so dass die Biegung der Platte gering ist, was das Zusammenwirken der Werkzeughälften positiv beeinflusst. Überdies wird der Hydraulikdruck als Gleichlast aufgebracht.

Die Verschiebung des Verriegelungselements ist sehr leicht realisierbar, weil technisch einfach.

Die Krafterzeugungseinheit, d. h. insbesondere das hydraulische Kolben-Zylinder-System, ist keinen Querbeschleunigungen und Vibrationen ausgesetzt, so dass eine hohe Lebensdauer für die Einheit sichergestellt ist.

In der Zeichnung ist ein Ausführungsbeispiel der Erfindung dargestellt. Es zeigen:
- Fig. 1: schematisch die Schließeinheit einer Spritzgießmaschine in der Vorderansicht und
- Fig. 2: den Schnitt C-D gemäß Fig. 1.

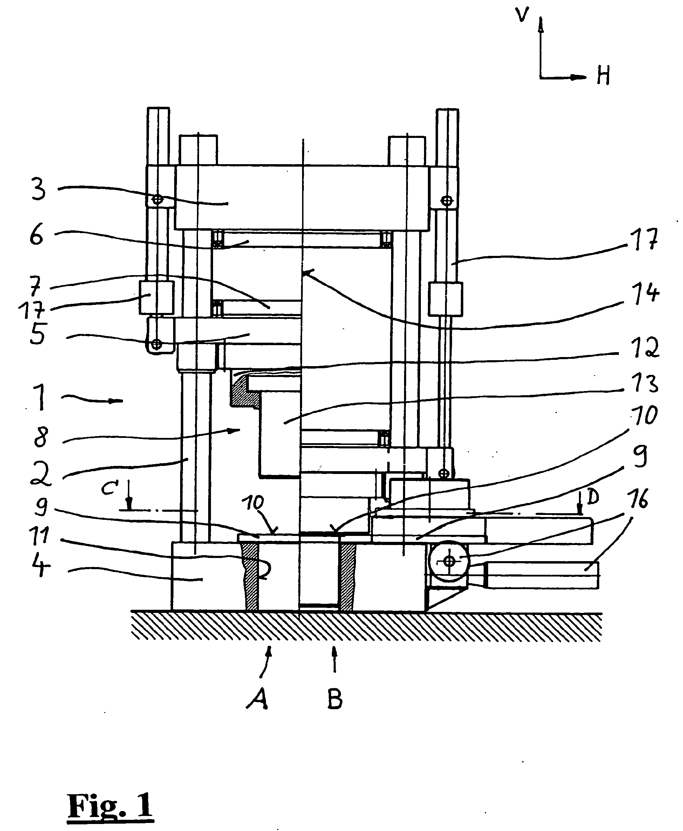

In den Figuren ist eine Schließeinheit 1 einer Spritzgießmaschine zu sehen. Fig. 1 zeigt den grundsätzlichen Aufbau der Schließeinheit 1 mit zwei festen Platten 3 und 4 (obere Platte 3 und untere Platte 4), die durch vier Holme 2 auf Abstand gehalten werden. Die Holme 2 sind vertikal angeordnet (vertikale Richtung V), so dass die Schließeinheit bzw. die hieraus gebildete Spritzgießmaschine als Vertikalmaschine ausgeführt ist.

Zwischen den beiden festen Platten 3, 4 ist auf den Holmen 2 geführt eine verschiebbare Werkzeugplatte 5 angeordnet. Ein oder mehrere Bewegungselemente 17 verfahren die verschiebbare Werkzeugplatte 5 in vertikale Richtung V gemäß den Erfordernissen des Spritzgießprozesses. An der Unterseite der oberen festen Platte 3 und an der Oberseite der verschiebbaren Werkzeugplatte 5 ist je eine Hälfte 6 und 7 eines Spritzgießwerkzeugs angeordnet. Ist die verschiebbare Werkzeugplatte 5 in ihre oberste Position gefahren, ist das Werkzeug 6, 7 geschlossen und zur Durchführung des Spritzgießprozesses bereit. In der nach unten gefahrenen Position der verschiebbaren Werkzeugplatte 5 sind die beiden Werkzeughälften 6, 7 getrennt und das Werkzeug 6, 7 zur Entnahme gespritzter Formteile geöffnet.

Angemerkt sei, dass in der linken Figurenhälfte in Fig. 1 der Zustand skizziert ist, in dem das Werkzeug 6, 7 weitgehend geschlossen ist, während die rechte Figurenhälfte der Fig. 1 die geöffnete Form 6, 7 zeigt.

Die Bewegungselemente 17 sind so ausgelegt, dass die Werkzeugöffnungs- und -schließbewegung schnell durchgeführt werden kann. Allerdings kann durch diese Elemente nicht die für das Zusammenhalten des Werkzeugs 6, 7 benötigte Werkzeugschließkraft aufgebracht werden. Hierfür ist ein Krafterzeugungselement 8 in Form eines hydraulischen Kolben-Zylinder-Systems vorgesehen. Das Krafterzeugungselement 8 besteht dabei aus einem Zylinder 12, der eine Achsrichtung 14 aufweist, die derjenigen der gesamten Schließeinheit 1 entspricht, d. h. der Zylinder 12 und damit das Krafterzeugungselement 8 ist als Einzelelement zentrisch in der Schließeinheit 1 angeordnet. Wie weiter zu sehen ist, ist der Zylinder 12 fest an der verschiebbaren Werkzeugplatte 5 befestigt und fährt bei vertikaler Bewegung der Platte 5 mit dieser auf und nieder.

Im Zylinder 12 des Krafterzeugungselements 8 ist ein Kolben 13 angeordnet. Durch entsprechende Beaufschlagung mit Hydraulikfluid ist ein Herausfahren bzw. Einfahren des Kolbens 13 aus oder in den Zylinder 12 möglich.

Um die Schließkraft zum Klemmen des Werkzeugs 6, 7 aufzubringen, wird wie folgt vorgegangen:

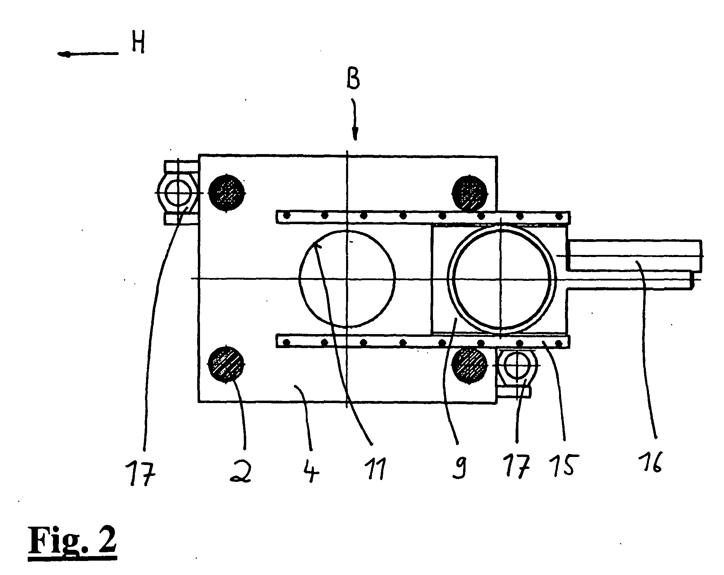

Auf der Oberseite der unteren festen Platte 4 ist ein Verriegelungselement 9 angeordnet, das senkrecht zur Schließbewegung V, also in horizontale Richtung H verschiebbar angeordnet ist. Wie in Fig. 2 zu sehen ist, sind Führungen 15 vorgesehen, die eine translatorische Bewegung des Verriegelungselements 9 in horizontale Richtung H zulassen. Die Verschiebung des Verriegelungselements 9 wird durch nur sehr schematisch angedeutete Antriebsmittel 16 bewerkstelligt.

In der unteren festen Platte 4 ist eine Öffnung 11 in Form einer Bohrung angeordnet. Diese Öffnung 11 ist so bemessen, dass der Kolben 13 vertikal nach unten in die feste Platte 4 eintreten kann, wodurch erreicht wird, dass trotz hinreichendem Öffnungshub des Werkzeugs eine insgesamt niedrige Bauhöhe der Schließvorrichtung 1 und insbesondere eine niedrige Bedienhöhe erreicht wird.

Das Verriegelungselement 9 ist so positioniert, dass es - in der in Fig. 1 mit A bezeichneten Geschlossenposition - einmal die Öffnung 11 abdeckt und so den Eintritt des Kolbens 13 verhindert. In der anderen Position - die in Fig. 1 mit B bezeichnet ist und die Geöffnetposition definiert - gibt das Verriegelungselement 9 die Öffnung 11 frei, so dass der Kolben 13 in die Platte 4 bzw. durch die Platte 4 ein- bzw. durchtauchen kann.

In der Geschlossenposition A bildet das Verriegelungselement 9 an seiner Oberseite einen Anschlag 10, der eine Auflage für den Kolben 13 darstellt. Der Kolben 13 legt sich beim Aufbringen der Schließkraft auf das Werkzeug 6, 7 und bei über die Öffnung 11 geschobenem Verriegelungselement 9 an dem Anschlag 10 an, so dass die Schließkraft aufgebracht werden kann; das Verriegelungselement 9 überträgt also die Schließkraft vom Kolben 13 auf die feste Platte 4.

Zum Öffnen des Werkzeugs 6, 7 wird das Verriegelungselement 9 in die in Fig. 2 skizzierte Geöffnetposition B zurückverfahren, so dass nunmehr die Öffnung 11 freigegeben ist und der Kolben 13 in diese eintauchen kann.

Dem Vergleich der linken mit der rechten Figurenhälfte der Fig. 1 ist zu entnehmen, dass trotz des erheblichen Öffnungshubs der Schließeinheit 1 eine geringe vertikale Bauhöhe der Schließeinheit vorliegt und insbesondere die Bedienhöhe gering bleibt. Die Schließeinheit muss daher nicht in einer Grube im Boden der Maschinenhalle untergebracht werden und auch ein Podest für den Maschinenbediener ist in der Regel entbehrlich.

Nicht näher skizziert ist, dass das Verriegelungselement 9 aus mehreren Plattenteilen aufgebaut sein kann, die in vertikale Richtung V übereinander angeordnet sind. Zum Einstellen auf eine gewünschte Werkzeughöhe können dann Plattenteile entfernt oder hinzugefügt werden, um für ein bestimmtes Werkzeug 6, 7 mit definierter Werkzeughöhe die optimale Einbauhöhe einfach erreichen zu können.

Die dargestellte Schließvorrichtung 1 kommt insbesondere in Spritzgießmaschinen zum Einsatz, in denen Gummimaterial (Elastomere) verarbeitet wird.

Während das Ausführungsbeispiel ein Krafterzeugungselement 8 in Form eines hydraulischen Systems zeigt, kommt das Erfindungsprinzip genauso auch bei anderen Schließsystemen zum Einsatz, z. B. bei mechanischen Krafterzeugungselementen in Form von Kniehebeln.

### Bezugszeichenliste:

- 1: Schließeinheit
- 2: Holm
- 3: feste Platte
- 4: feste Platte
- 5: verschiebbare Werkzeugplatte
- 6: Teil des Spritzgießwerkzeugs
- 7: Teil des Spritzgießwerkzeugs
- 6, 7: Spritzgießwerkzeug
- 8: Krafterzeugungselement
- 9: Verriegelungselement
- 10: Anschlag
- 11: Öffnung
- 12: Zylinder des Krafterzeugungselements
- 13: Kolben des Krafterzeugungselements
- 14: Achsrichtung
- 15: Führung
- 16: Antriebsmittel
- 17: Bewegungselement

- V: vertikale Richtung
- H: horizontale Richtung
- A: Geschlossenposition
- B: Geöffnetposition

## Patentansprüche

1. Schließeinheit (1) für eine Spritzgießvorrichtung zur Verarbeitung von thermoplastischem, duroplastischem oder elastomerem Material, bei der zwischen zwei mittels Holmen (2) auf Abstand gehaltenen festen Platten (3, 4) eine relativ zu diesen verschiebbare Werkzeugplatte (5) angeordnet ist, wobei an einer der festen Platten (3) und an der verschiebbaren Werkzeugplatte (5) je ein Teil eines Spritzgießwerkzeugs (6, 7) angeordnet ist, wobei zwischen der einen festen Platte (4) und der verschiebbaren Werkzeugplatte (5) ein die Schließkraft erzeugendes Krafterzeugungselement (8) angeordnet werden kann und wobei die Holme (2) in vertikaler Ausrichtung (V) angeordnet sind, wobei das Krafterzeugungselement (8) an der verschiebbaren Werkzeugplatte (5) befestigt ist, wobei an der einen festen Platte (4) ein Verriegelungselement (9) angeordnet ist, das gesteuert entweder einen Anschlag (10) für das Krafterzeugungselement (8) an der einen festen Platte (4) bildet oder eine Öffnung (11) zum Eintritt bzw. Durchtritt zumindest eines Teils des Krafterzeugungselements (8) in bzw. durch die eine feste Platte (4) freigibt, und wobei das Krafterzeugungselement (8) als hydraulisches Kolben-Zylinder-System ausgebildet ist, wobei der Zylinder (12) des Krafterzeugungselements (8) mit der verschiebbaren Werkzeugplatte (5) verbunden ist und wobei sich der Kolben (13) des Krafterzeugungselements (8) in Achsrichtung (14) des Krafterzeugungselements (8) vertikal nach unten erstreckt, wobei das Verriegelungselement (9) plattenförmig ausgebildet ist und in einer Führung (15) in horizontale Richtung (H) verschiebbar gelagert ist und wobei die Öffnung (11) zum Eintritt bzw. Durchtritt des Kolbens (13) des Krafterzeugungselements (8) zentrisch in der festen Platte (4) ausgebildet ist.

2. Schließeinheit nach Anspruch 1, **dadurch gekennzeichnet, dass** das in vertikale Richtung (V) unten angeordnete Ende des Kolbens (13) zur Anlage am Anschlag (10) des Verriegelungselements (9) ausgebildet ist.

3. Schließeinheit nach Anspruch 1 oder 2, **dadurch gekennzeichnet, dass** das Verriegelungselement (9) mit Antriebsmitteln (16) zwischen einer Geschlossenposition (A) und einer Geöffnetposition (B) verfahren werden kann.

4. Schließeinheit nach Anspruch 3, **dadurch gekennzeichnet, dass** die Antriebsmittel (16) als elektrische Antriebsmittel ausgebildet sind.

5. Schließeinheit nach Anspruch 3, **dadurch gekennzeichnet, dass** die Antriebsmittel (16) als hydraulische Antriebsmittel ausgebildet sind.

6. Schließeinheit nach einem der Ansprüche 3 bis 5, **dadurch gekennzeichnet, dass** die Antriebsmittel (16) zum geschwindigkeitsgeregelten und/oder lagegeregelten Anfahren der Geschlossenposition (A) und der Geöffnetposition (B) ausgebildet sind.

## Claims

1. Clamping unit (1) for an injection-molding device for processing thermoplastic, thermosetting or elastomeric material, in which there is arranged between two fixed platens (3, 4), kept at a distance by means of tie bars (2), a platen (5) which can be displaced in relation to said fixed platens, part of an injection mold (6, 7) respectively being arranged on one of the fixed platens (3) and on the displaceable platen (5), it being possible for a force generating element (8), which generates the clamping force, to be arranged between the one fixed platen (4) and the displaceable platen (5), and the tie bars (2) being arranged in vertical alignment (V), wherein the force generating element (8) is fastened to the displaceable platen (5), wherein on the one fixed platen (4) there is arranged a locking element (9) which, in a controlled manner, either forms a stop (10) for the force generating element (8) on the one fixed platen (4) or exposes an opening (11) for at least part of the force generating element (8) to enter or pass through the one fixed platen (4) and wherein the force generating element (8) is formed as a hydraulic piston-cylinder system, wherein the cylinder (12) of the force generating element (8) is connected to the displaceable platen (5) and wherein the piston (13) of the force generating element (8) extends vertically downward in the axial direction (14) of the force generating element (8), wherein the locking element (9) takes the form of a plate and is mounted displaceably in the horizontal direction (H) in a guide (15) and wherein the opening (11) for entering or passing through of the piston (13) of the force generating element (8) is formed centrally in the fixed platen (4).

2. Clamping unit as claimed in claim 1, **characterized in that** the end of the piston (13) arranged at the bottom in the vertical direction (V) is formed for bearing against the stop (10) of the locking element (9).

3. Clamping unit as claimed in claims 1 or 2, **characterized in that** the locking element (9) is able to be moved between a closed position (A) and an opened position (B) by driving means (16).

4. Clamping unit as claimed in claim 3, **characterized in that** the driving means (16) take the form of electric driving means.

5. Clamping unit as claimed in claim 3, **characterized in that** the driving means (16) take the form of hydraulic driving means.

6. Clamping unit as claimed in one of claims 3 to 5, **characterized in that** the driving means (16) are formed for moving into the closed position (A) or the opened position (B) in a speed-controlled and/or position-controlled manner.

## Revendications

1. Unité de fermeture (1) pour un dispositif de moulage par injection pour le traitement de matière thermoplastique, duroplastique ou élastomère, dans laquelle, entre deux plaques fixes (3, 4) maintenues espacées au moyen de longerons (2), on dispose une plaque d'outil (5) déplaçable par rapport à elles, une partie d'un outil de moulage par injection (6, 7) étant à chaque fois disposée sur l'une des plaques fixes (3) et sur la plaque d'outil déplaçable (5), un élément de génération de force (8) produisant la force de fermeture pouvant être disposé entre l'une des plaques fixes (4) et la plaque d'outil déplaçable (5) et les longerons (2) étant disposés suivant une orientation verticale (V), l'élément de génération de force (8) étant fixé sur la plaque d'outil déplaçable (5), un élément de verrouillage (9) étant disposé sur l'une des plaques fixes (4), lequel forme, de manière commandée, une butée (10) pour l'élément de génération de force (8) sur l'une des plaques fixes (4) ou libère une ouverture (11) pour l'entrée ou le passage d'au moins une partie de l'élément de génération de force (8) dans ou à travers l'une des plaques fixes (4), l'élément de génération de force (8) étant réalisé sous forme de système de piston et cylindre hydraulique, le cylindre (12) de l'élément de génération de force (8) étant connecté à la plaque d'outil déplaçable (5) et le piston (13) de l'élément de génération de force (8) s'étendant verticalement vers le bas dans la direction axiale (14) de l'élément de génération de force (8), l'élément de verrouillage (9) étant réalisé sous forme de plaque et étant monté de manière déplaçable dans un guide (15) dans la direction horizontale (H) et l'ouverture (11) pour l'entrée ou le passage du piston (13) de l'élément de génération de force (8) étant réalisée centralement dans la plaque fixe (4).

2. Unité de fermeture selon la revendication 1, **caractérisée en ce que** l'extrémité du piston (13) disposée en bas dans la direction verticale (H) est réalisée pour venir en appui contre la butée (10) de l'élément de verrouillage (9).

3. Unité de fermeture selon la revendication 1 ou 2, **caractérisée en ce que** l'élément de verrouillage (9) peut être déplacé avec des moyens d'entraînement (16) entre une position fermée (A) et une position ouverte (B).

4. Unité de fermeture selon la revendication 3, **caractérisée en ce que** les moyens d'entraînement (16) sont réalisés sous forme de moyens d'entraînement électriques.

5. Unité de fermeture selon la revendication 3, **caractérisée en ce que** les moyens d'entraînement (16) sont réalisés sous forme de moyens d'entraînement hydrauliques.

6. Unité de fermeture selon l'une quelconque des revendications 3 à 5, **caractérisée en ce que** les moyens d'entraînement (16) sont réalisés pour engager, de manière régulée en vitesse et/ou en position, la position fermée (A) et la position ouverte (B).
